(19) Europäisches Patentamt
European Patent Office
Office européen des brevets

(11) Publication number: **0 368 308 A2**

(12) # EUROPEAN PATENT APPLICATION

(21) Application number: **89120784.7**

(22) Date of filing: **09.11.89**

(51) Int. Cl.5: **C08L 71/12, C08L 77/00, C08K 5/349**

(30) Priority: **11.11.88 JP 286366/88**

(43) Date of publication of application: **16.05.90 Bulletin 90/20**

(84) Designated Contracting States: **DE FR GB IT NL**

(71) Applicant: **SUMITOMO CHEMICAL COMPANY, LIMITED**
**Kitahama 4-chome 5-33**
**Chuo-ku Osaka 541(JP)**

(72) Inventor: **Maruyama, Takashi**
**12-7, Koyocho-2-chome Kita-ku**
**Kobe(JP)**
Inventor: **Mizuno, Yukio**
**18-8, Hoshigoecho**
**Niihama-shi(JP)**

(74) Representative: **Vossius & Partner**
**Siebertstrasse 4 P.O. Box 86 07 67**
**D-8000 München 86(DE)**

(54) **Resin composition.**

(57) Disclosed is a resin composition excellent in both the mechanical properties and processability. This composition comprises 100 parts by weight of a resin comprising (A) 5-95% by weight of a polyphenylene ether resin and (B) 95-5% by weight of a polyamide resin and (C) 0.05-0.45 part by weight of melamine. The composition which additionally contains 3-95 parts by weight of a rubber-like polymer is much improved in impact strength.

EP 0 368 308 A2

# RESIN COMPOSITION

The present invention relates to a resin composition which comprises a polyphenylene ether and a polyamide.

More particularly, it relates to a novel thermoplastic resin composition which comprises a resin composition comprising a polyphenylene ether and a polyamide, to which melamine is added and, if necessary, a rubber-like polymer is further added as an impact strength modifier and which is excellent in flowability, mechanical properties and processability.

The composition of the present invention can be made into shaped articles, sheets or films, by e.g. injection molding or extrusion molding.

In general, polyphenylene ethers are thermoplastic resins superior in various properties such as mechanical properties, heat resistance, electrical properties, chemical resistance, hot water resistance, flame resistance and dimensional stability, but suffer from the problems such as poor processability and relatively low impact resistance owing to its high melt viscosity.

Blending of a polyphenylene ether and a polystyrene has been known as a method for improving processability of polyphenylene ether by reducing melt viscosity with maintaining its excellent various properties. However, the excellent properties of the polyphenylene ether such as heat resistance and flame resistance are apt to be lost by imparting thereto practical processability. Besides, the impact resistance of the polyphenylene ether is still not sufficient even if it is combined with polystyrene.

On the other hand, polyamides are thermoplastic resins superior in heat resistance, rigidity, strength and oil resistance, but inferior in processability and impact resistance and conspicuous in change of properties and dimension due to their high water absorption. Thus, further improvement has been demanded. If a resin composition having characteristics of both polyphenylene ether and polyamide and improved in processability and impact resistance can be obtained by blending a polyphenylene ether with a polyamide, wider new uses thereof can be expected. However, it has been considered that polyphenylene ethers and polyamides are extremely different in melt viscosity and are very poor in compatibility and dispersibility when combined.

In fact, mere mixing of them results in the following problems.

(1) Owing to large difference in viscosity of the molten polymers, stable taking-off of extruded strand is nearly impossible and operability for molding is also much inferior.

(2) Mechanical properties, especially impact resistance of molded article is lower than that expectable from sum of impact strengths of respective resins and practically usable molded articles cannot be obtained.

Regarding these problems, there have been proposed improvements by using additives having reactivity or compatibility as disclosed in JP-B-60-11966 and JP-A-56-47432, 57-10642 and 60-58463.

The object of the present invention is to provide a resin composition comprising a polyphenylene ether and a polyamide which is free from the above-mentioned problems and is excellent in mechanical properties and processability.

It has now surprisingly been found that a resin composition superior in both the mechanical properties and processability can be obtained by adding a specific amount of melamine and, if necessary, an impact strength modifier to a resin composition comprising a polyphenylene ether and a polyamide. The present invention has been accomplished on the basis of this finding.

A flame-retardant resin composition comprising a polyphenylene ether, a polyamide and melamine is disclosed in JP-A-62-236853. However, this patent publication discloses use of a large amount of melamine in order to impart flame-retardance to a composition comprising a polyphenylene ether and a polyamide and does not suggest that melamine can improve compatibility between polyphenylene ether and polyamide. As explained hereinafter, it is a very surprising and novel fact that compatibility between a polyphenylene ether and a polyamide can be improved only by using a specific amount of melamine, whereby a composition excellent in mechanical properties, thermal properties and other properties can be obtained.

That is, the present invention relates to a resin composition which comprises 100 parts by weight of resin comprising

(A) a polyphenylene ether resin: 5-95 wt%,

(B) a polyamide resin: 95-5 wt%, and

(C) 0.05-0.45 part by weight of melamine.

The present invention further relates to a resin composition which comprises 100 parts by weight of resin comprising

(A) a polyphenylene ether resin: 5-95 wt%,
(B) a polyamide resin: 95-5 wt%,
(C) 0.05-0.45 part by weight of melamine, and
(D) 3-95 parts by weight of a rubber-like polymer.

The polyphenylene ether (A) used in the present invention is a polymer obtained by oxidative polymerization of a phenol compound represented by the formula:

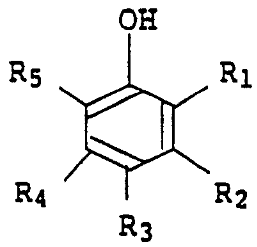

wherein $R_1$, $R_2$, $R_3$, $R_4$ and $R_5$ each represents a hydrogen atom, a halogen atom, a hydrocarbon group, or a substituted hydrocarbon group and at least one of them is a hydrogen atom, with oxygen or an oxygen-containing gas using an oxidative coupling catalyst. The hydrocarbon group is preferably an alkyl, aryl, arylalkyl or alkylaryl residue having 1 to 20 carbon atoms which residues may be substituted by $C_{1-4}$ alkyl or alkoxy, halogen, hydroxy, carboxy or cyano groups.

Examples of $R_1$, $R_2$, $R_3$, $R_4$, and $R_5$ are hydrogen, chlorine, fluorine, bromine, and iodine atoms, and methyl, ethyl, propyl, butyl, chloroethyl, hydroxyethyl, phenylethyl, benzyl, hydroxymethyl, carboxyethyl, methoxycarbonylethyl, cyanoethyl, phenyl, chlorophenyl, methylphenyl, dimethylphenyl, and ethylphenyl groups.

Examples of the phenol compound of the above formula are phenol, o-, m- or p-cresol, 2,6-, 2,5-, 2,4-or 3,5-dimethylphenol, 2-methyl-6-phenylphenol, 2,6-diphenylphenol, 2,6-diethylphenol, 2-methyl-6-ethylphenol, 2,3,5-, 2,3,6- or 2,4,6-trimethylphenol. These phenols may be used alone or in combination of two or more.

Furthermore, there may also be used copolymers of the phenol compounds of the above formula with other phenol compounds, for example, dihydric phenols such as bisphenol A, tetrabromobisphenol A, resorcin, and hydroquinone.

The oxidative coupling catalyst used for oxidative polymerization of the phenol compounds is not critical and any catalyst can be used as far as it has polymerization ability. Examples are cuprous salts-tertiary amines such as cuprous chloride-trimethylamine, cuprous acetate-triethylamine and cuprous chloride-pyridine: cupric salt-tertiary amine-alkali metal hydroxides such as cupric chloride-pyridine-potassium hydroxide: manganese salt-primary amines such as manganese chloride-ethanolamine and manganese acetate-ethylenediamine: manganese salt-alcoholates or phenolates such as manganese chloride-sodium methylate and manganese chloride-sodium phenolate: and cobalt salt-tertiary amines. Other catalyst systems are also known and the polyphenylene ether used in the present invention may be produced by using any catalyst systems and any polymerization conditions.

The polyamide resin (B) used in the present invention has $-\underset{\underset{O}{\|}}{C}-NH-$ bond in polymer main chain and any can be used as far as it can be molten by heating.

As typical examples of the polyamide resin (B), mention may be made of 4-nylon, 6-nylon, 6,6-nylon, 12-nylon, 6,10-nylon, polyamides from terephthalic acid and trimethylhexamethylenediamine, polyamides from adipic acid and m-xylenediamine, polyamides from adipic acid and azelaic acid and 2,2-bis(p-aminocyclohexyl)-propane, polyamides from terephthalic acid and 4,4′-diaminodicyclohexylmethane, polyamides from isophthalic acid, isophoronediamine and laurolactam, polyamides from isophthalic acid, 4,4′-diamino-3,3′-dimethyldicyclohexylenemethane and laurolactam, and polyamides from isophthalic acid, terephthalic acid, hexamethylenediamine and 2,2-bis(p-aminocyclohexyl)-methane. These may be used alone or as mixtures of two or more or as copolymers thereof.

In the present invention, the mixing ratio of polyphenylene ether resin (A) and polyamide resin (B) is suitably as follows: (A) = 5-95 wt%, preferably 20-80 wt% and (B) = 95-5 wt%, preferably 80-20 wt%. If the amount of polyamide resin is less than 5 wt%, the effect to improve solvent resistance is low and if it is more than 95 wt%, thermal properties such as heat distortion temperature tend to be inferior.

In the present invention, the amount of melamine (C) used is important and melamine (C) is used in an amount of 0.05-0.45 part by weight per 100 parts by weight of polyphenylene ether resin (A) and polyamide

resin (B). If the amount of melamine (C) is less than 0.05 part by weight, compatibility between polyphenylene ether and polyamide is inferior and if it is more than 0.45 part by weight, impact strength is low which seems to be caused by inferior compatibility between polyphenylene ether and polyamide and besides heat distortion temperature is low and desired resin composition cannot be obtained.

Furthermore, in order to markedly improve impact strength, it is preferred to add rubber-like polymer (D).

The rubber-like polymer (D) in the present invention means natural and synthetic polymers which are elastic at room temperature, e.g., 20-25 °C. As examples thereof, mention may be made of natural rubber, diene rubbers (such as polybutadiene, polyisoprene and polychloroprene) and copolymers of diene and vinyl monomer (such as styrene-butadiene random copolymer, styrene-butadiene block copolymer, styrene-butadiene-styrene block copolymer, styrene-isoprene random copolymer, styrene-isoprene block copolymer, styrene-isoprene-styrene block copolymer, styrene-grafted polybutadiene, and butadiene-acrylonitrile copolymer), polyisobutylene, copolymers of isobutylene and butadiene or isoprene, ethylene-propylene copolymers, ethylene-propylene-diene ethylene-butene-1 copolymers, ethylene-acrylic acid copolymers and alkali metal salts thereof (so-called ionomers), ethylene-glyoidyl acrylate copolymers, ethylene-alkyl acrylate copolymers (such as ethylene- ethyl acrylate copolymer and ethylene-butyl acrylate copolymer), thiokol rubber, polysulfide rubber, acrylic rubber, polyurethane rubber, polyether rubber, and epichlorohydrin rubber.

These rubber-like polymers can be produced by various methods such as emulsion polymerization and solution polymerization and using various catalysts such as peroxides, trialkylaluminum, lithium halides and nickel catalysts.

Furthermore, there may also be used those which have various crosslinking degrees, various proportions of micro structures such as cis structure, trans structure and vinyl group or various average rubber particle sizes (in resin composition).

Various copolymers such as random copolymers, block copolymers, and graft copolymers can be used as the rubber-like polymers in the present invention.

Besides, in the preparation of these rubber-like polymers, it is also possible to copolymerize with monomers such as other olefins, dienes, aromatic vinyl compounds, acrylic acid, acrylates and methacrylates.

The copolymerization may be carried out by any methods such as random copolymerization, block copolymerization and graft copolymerization. Specific examples of the above monomers are ethylene, propylene, styrene, chlorostyrene, α-methylstyrene, butadiene, isoprene, chlorobutadiene, butene, isobutylene, methyl acrylate, acrylic acid, ethyl acrylate, butyl acrylate, methyl methacrylate, acrylonitrile, maleic anhydride, and glycidyl methacrylate.

Moreover, the rubber-like polymers used in the present invention include those which are modified. As examples of these modified rubber-like polymers, mention may be made of hydroxy or carboxy terminal modified polybutadienes, partially or completely hydrogenated styrene-butadiene, styrene-butadiene-styrene, styrene-isoprene, and styrene-isoprene-styrene block copolymers, rubber-like polymers modified with at least one compound selected from compounds having at least one of carboxy group, amino group, imino group, epoxy group, amide group, vinyl group, isocyanate group and hydroxyl group in its molecule or acid anhydride thereof, carboxylic acid ester, and oxazoline ring such as ethylene-propylene copolymer, ethylene-propylene-non-conjugated copolymer, styrene-butadiene copolymer (A-B or A-B-A′ block, random and graft copolymers) and its hydrogenated copolymers,and styrene-isoprene copolymer (A-B or A-B-A′ block, random and graft copolymers) and its hydrogenated copolymers which are modified, for example, with acrylic acid, glycidyl methacrylate or maleic anhydride. Modification can be carried out by known methods such as graft copolymerization and random copolymerization.

These rubber-like polymers may be used alone or in combination of two or more.

In the case of diene rubber and copolymers of diene and vinyl compound, those which are variously different in micro structure of double bond (vinyl group, cis-1,4 bond, trans 1,4-bond) may also be used as rubbers of the present invention.

Preferred rubbers are copolymers comprising 40-100% by weight of butadiene and 60-0% by weight of styrene, copolymers comprising 65-82% by weight of butadiene and 35-18% by weight of acrylonitrile, styrene-butadiene and styrene-butadiene-styrene block copolymers (including all of linear block copolymers, radial block copolymers, etc.) and hydrogenated products thereof, styrene-isoprene and styrene-isoprene-styrene block copolymers and hydrogenated products thereof, styrene-grafted polybutadienes (obtained by adding styrene to polybutadiene or butadiene-styrene copolymer latex and carrying out emulsion polymerization by a free-radical initiator), ethylene-propylene copolymers and ethylene-propylene-diene copolymers and these polymers which are modified with maleic anhydride, glycidyl

methacrylate or styrene.

The rubber-like polymer (D) is used in an amount of 3-95 parts by weight, preferably 5-50 parts by weight per 100 parts by weight of polyphenylene ether resin (A) and polyamide resin (B).

Other high molecular compounds or modifiers may also be added to the resin composition of the present invention.

As examples of the other high molecular compounds, mention may be made of polyolefins such as polyethylene, polypropylene, ethylene-propylene block copolymers, polymethylpentene, ethylene-α-olefin copolymers (for example, ethylene-butene copolymer, ethylene-4-methyl-pentene copolymer and ethylene-pentene copolymer which have a density of 0.75-0.97); homopolymers and copolymers of various vinyl compounds such as polyvinyl chloride, polymethyl methacrylate, polyvinyl acetate, polyvinylpyridine, polyvinylcarbazole, polyacrylamide, polyacrylonitrile and alkenyl aromatic resin; composite high molecular compounds such as polycarbonate, polysulfone, polyether sulfone, polyethylene terephthalate, polybutylene terephthalate, polyarylene esters (for example, u polymer supplied by Unitika Ltd.), polyphenylene sulfides, and polyacetals; and various thermosetting resins such as silicone resin fluorine-contained resin, polyimide, polyamideimide, phenol resin, alkyd resin, unsaturated polyester resin, epoxy resin, and Dapon resin.

Of these high molecular compounds, preferred are polyolefins, polyamides, alkenyl aromatic resins and rubber modified alkenyl aromatic resins. Most preferred are alkenyl aromatic resins and rubber modified alkenyl aromatic resins.

The alkenyl aromatic resins used in the present invention are selected from those which contain at least 25% by weight of polymer unit derived from monomer having the following formula:

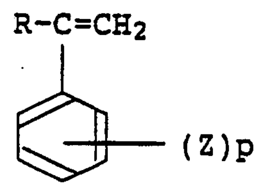

wherein R represents a hydrogen atom, a lower alkyl group (for example, alkyl group of 1-4 carbon atoms) or a halogen atom, z represents a hydrogen atom, a vinyl group, a halogen atom, a hydroxyl group or a lower alkyl group and p represents 0 or an integer of 1-5.

Examples of alkenyl aromatic resins are homopolymers such as polystyrene, polychlorostyrene, and poly-α-methylstyrene and copolymers thereof and styrene-containing copolymers such as styrene-acrylonitrile copolymer, styrene-divinylbenzene copolymer, and styrene-acrylonitrile-α-methylstyrene copolymer. Of these resins, preferred are homopolystyrene, styrene-α-methylstyrene copolymer, styrene-acrylonitrile copolymer, styrene-α-chlorostyrene copolymer and styrene-methyl methacrylate copolymer. Especially preferred is homopolystyrene.

The rubber modified alkenyl aromatic resins used in the present invention mean those of two phase system comprising an alkenyl aromatic resin matrix in which rubber particles are dispersed. Methods for producing these resins include , for example, mechanical mixing of rubber and alkenyl aromatic resin and a method comprising dissolving rubber in an alkenyl aromatic monomer and successively polymerizing the alkenyl aromatic monomer. The latter method is industrially employed for producing so-called high-impact strength polystyrene.

Modifiers include reinforcing agents such as glass fiber, carbon fiber, potassium titanate fiber, and high-modulus polyamide fiber, inorganic and organic fillers such as carbon black, silica, $TiO_2$, talc, calcium carbonate, magnesium sulfate and wollastonite, plasticizers such as triphenyl phosphate and phthalic acid esters, lubricating agents, stabilizers, flame retardants such as $Sb_2O_3$, halogen compounds and phosphoric acid esters, dyes and pigments.

The method for producing the resin composition of the present invention has no special limitation and any known methods can be employed.

The method is effective which comprises mixing the components in the form of solution and evaporating the solvent or precipitating them in non-solvents, but from the industrial point of view, practically a method of kneading them in the form of solutions. Melt-kneading is carried out by generally employed single-screw or twin-screw extruder, various kneaders or so. Especially preferred is twin-screw high-performance kneader.

Before kneading, it is preferred to uniformly mix powders or pellets of the component resins in a tumbler or Henschel mixer, but if necessary, the mixing may be omitted and each resin may be separately

fed to an extruder through a metering apparatus.

The kneaded resin composition is molded by various molding methods such as injection molding and extrusion molding, but the present invention further includes a method for obtaining molded article by dry blending at injection molding or extrusion molding and carrying out direct kneading during melt processing operation without the previous kneading.

There is no special limitation in the order of blending and polyphenylene ether resin (A), polyamide resin (B), melamine (C) and rubber-like polymer (D) may be simultaneously blended or polyphenylene ether resin (A) and melamine (C) are previously blended to obtain a composition and then the composition may be blended with polyamide resin (B) and rubber-like polymer (D). Other orders may also be employed.

The following nonlimiting examples illustrate the present invention. Heat distortion temperature (H.D.T.) and Izod impact strength (3.2 mm thick) were measured in accordance with JIS K7207 and JIS K7110, respectively.

Examples 1-3

Poly-(2,6-dimethyl-1,4-phenylene ether) having an intrinsic viscosity [$\eta$] of 0.50 (measured in $CHCl_3$ at 25° C) was used as polyphenylene ether resin.

Nylon-6 (A-1030BRT supplied by Unitika, Ltd.) was used as polyamide resin.

Hydrogenated styrene-isoprene block copolymer [Kraton-G-1701 (abbreviated to "SEP" hereinafter) supplied by Shell Chemical Co.) was used as rubber-like polymer.

These were dry blended at the blending ratio as shown in Table 1 and kneaded at 270-290° C by a twin-screw extruder (TEM-50 supplied by Toshiba Machine Co.). The resulting pellets were injection molded to obtain a test piece and properties as shown in Table 1 were measured. The results are shown in Table 1.

Comparative Examples 1-3

Results obtained when melamine was not used (Comparative Example 1) and when melamine was used in an amount outside the range of the present invention (Comparative Examples 2 and 3) are shown in Table 1.

Table 1

| | Blending ratio (part by weight) | | | | | |
|---|---|---|---|---|---|---|
| | (A) | (B) | (C) | (D) | Izod impact strength (with notch) | Heat distortion temperature (load 18.6 kg) |
| | Polyphenylene ether resin | Nylon-6 | Melamine | SEP | kg•cm/cm | ° C |
| Example 1 | 48 | 42 | 0.45 | 10 | 40 | 130 |
| " 2 | " | " | 0.3 | " | 42 | 140 |
| " 3 | " | " | 0.1 | " | 39 | 134 |
| Comparative Example 1 | 48 | 42 | 0 | 10 | 3 | 112 |
| " 2 | " | " | 5 | " | 6 | 123 |
| " 3 | " | " | 10 | " | 4 | 130 |

As is clear from the results of Table 1, the resin compositions which contained a specific amount of melamine according to the present invention had high impact strength and high heat distortion temperature. On the other hand, when melamine was not used and when melamine was used in an amount of larger than that specified in the present invention, impact strength of the resin compositions was low and heat distortion temperature was also low.

Examples 4-7

Test pieces were prepared in the same manner as in Examples 1-3 using the following various nylons and rubber-like polymers and properties thereof were measured. The results are shown in Table 2.

Nylon 6,6:

UBE NYLON 2020B supplied by Ube Industries, Ltd.

Aromatic nylons:

A-1: Polyamide resins prepared from terephthalic acid/isophthalic acid/bis-(p-aminocyclohexyl)-methane/hexamethylenediamine = 75/25/50/50 (molar ratio)
A-2: Polyamide resin prepared from adipic acid/m-xylylene diamine

SEBS:

Hydrogenated styrene-butadiene-styrene block copolymer (KRATON G-1650 supplied by Shell Chemical Co.)

M-EP:

Maleic anhydride modified ethylene-propylene copolymer rubber

Table 2

| | | Blending ratio (part by weight) | | | | | |
|---|---|---|---|---|---|---|---|
| | | (A) | (B) | (C) | (D) | Izod impact strength | Heat distortion temperature (load 18.6 kg) |
| | | Polyphenylene ether resin | Polyamide resin | Melamine | Rubber-like polymer | kg•cm/cm | °C |
| Example | 4 | 40 | Nylon-6 60 | 0.3 | SEBS 15 | 63 | 110 |
| | 5 | 45 | Nylon-66 55 | 0.2 | M-EP 10<br>SEBS 5 | 59 | 131 |
| | 6 | 43 | Nylon-6 52<br>A-1 5 | 0.3 | M-EP 20 | 61 | 129 |
| | 7 | 60 | Nylon-6 37<br>A-2 3 | 0.3 | M-EP 20 | 53 | 145 |

As explained above, according to the present invention, resin compositions can be provided which comprise polyphenylene ether resin and polyamide resin and are excellent in processability and impact resistance.

**Claims**

1. A resin composition which comprises:
100 parts by weight of a resin comprising:
(A) 5-95% by weight of a polyphenylene ether resin and
(B) 95-5% by weight of a polyamide resin, and
(C) 0.05-0.45 part by weight of melamine.

2. A resin composition which comprises:
100 parts by weight of a resin comprising:
(A) 5-95% by weight of a polyphenylene ether resin and
(B) 95-5% by weight of a polyamide resin,
(C) 0.50-0.45 by weight of melamine, and
(D) 3-95 parts by weight of a rubber-like polymer.

3. A resin composition according to claim 1 or 2, wherein the polyphenylene ether resin (A) is a polymer obtained by oxidative polymerization of a phenol represented by the formula:

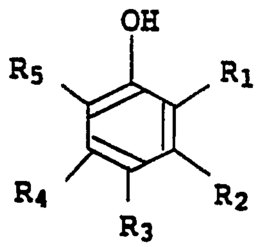

wherein $R_1$, $R_2$, $R_3$, $R_4$ and $R_5$ each represents a hydrogen atom, a halogen atom, a hydrocarbon group or a substituted hydrocarbon group, with a proviso that at least one of them is a hydrogen atom, with oxygen or an oxygen-containing gas in the presence of an oxidative coupling catalyst.

4. A resin composition according to claim 2, wherein the rubber-like polymer (D) is a natural or synthetic polymer which is elastic at room temperature.

5. A resin composition according to claim 1 or 2, which additionally contains other high molecular compounds or a modifier.

6. A molded article which is made from the composition of claim 1 or 2.